# EUROPEAN PATENT APPLICATION

(11) **EP 4 683 251 A1**
(43) Date of publication of application: **21.01.2026**
(21) Application number: 24188764.5
(22) Date of filing: 16.07.2024
(51) Int. Cl.: H04J 11/00, H04J 13/00, H04W 52/02

(54) **USER EQUIPMENT, NETWORK NODE, AND METHODS FOR A USER EQUIPMENT AND A NETWORK NODE**

(71) Applicant: Panasonic Intellectual Property Corporation of America, Torrance, CA 90504 (US)
(72) Inventor: LI, Hongchao, 63225 Langen (DE); SUZUKI, Hidetoshi, Osaka, 571-8501 (JP)
(74) Representative: Grünecker Patent- und Rechtsanwälte PartG mbB

(57) **Abstract**

A user equipment, UE, comprising a transceiver, which, in operation, monitors a plurality of occasions for reception of a low-power signal indicating at least one sequence; and circuitry, which, in operation, determines a hopping interval for the at least one sequence of the low-power signal, wherein the at least one sequence changes according to a predetermined rule at the hopping interval, wherein the transceiver, in operation, receives, on one of the plurality of occasions, the low-power signal.

## Description

### BACKGROUND

### 1. Technical field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates wireless communication using a low-power signal with reduced interference.

In an embodiment, the techniques disclosed herein feature: A user equipment, UE, comprising a transceiver, which, in operation, monitors a plurality of occasions for reception of a low-power signal indicating at least one sequence; and circuitry, which, in operation, determines a hopping interval for the at least one sequence of the low-power signal, wherein the at least one sequence changes according to a predetermined rule at the hopping interval, wherein the transceiver, in operation, receives, on one of the plurality of occasions, the low-power signal.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

In the following exemplary embodiments are described in more detail with reference to the attached figures and drawings.
- **Fig. 1**: shows an exemplary architecture for a 3GPP NR system;
- **Fig. 2**: illustrates transitioning between LR operation and MR operation of a user equipment;
- **Fig. 3**: illustrates a user equipment and a network node in a communication system;
- **Fig. 4**: shows exemplary functional structures of a circuitry of a user equipment and a circuitry of a network node;
- **Fig. 5**: illustrates the steps of a method for a user equipment according to an embodiment;
- **Fig. 6**: illustrates the steps of a method for a network node according to the embodiment;
- **Fig. 7**: illustrates the steps of a method for a user equipment according to another embodiment;
- **Fig. 8**: illustrates the steps of a method for a network node according to the embodiment;
- **Fig. 9**: illustrates the steps of a method for a user equipment according to yet another embodiment;
- **Fig. 10**: illustrates the steps of a method for a network node according to the embodiment;
- **Fig. 11**: illustrates a hopping interval, which corresponds to one occasion;
- **Fig. 12**: illustrates a hopping interval, which corresponds to multiple occasions;
- **Fig. 13**: illustrates a section of a low-power signal, being an OOK signal, with sequences overlaid on On-durations of the signal; and
- **Fig. 14**: shows exemplary functional split options in 5G O-RAN.

### DETAILED DESCRIPTION

### 5G NR system architecture and protocol stacks

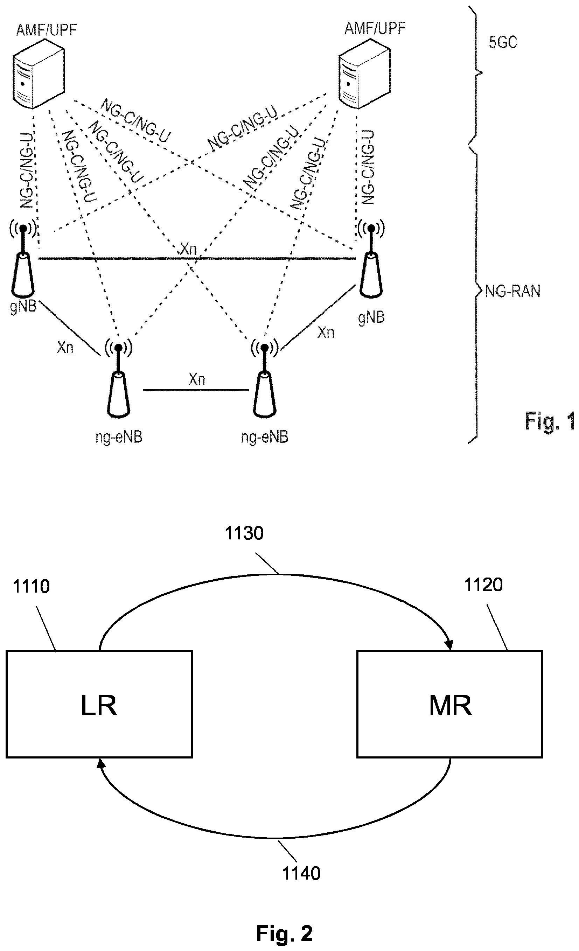

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 /Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel. 18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRX Active Time for one or more UEs. The following information is transmitted by means of the DCI format 2_6 with CRC scrambled by PS-RNTI: *block number 1, block number 2,..., block number N.* The starting position of a block is determined by the parameter PSPositionDCI2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB (System Information Block) and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Low power operation

In a low power operation a UE may receive low power radio reference signals. Such a low power radio reference signal may include, for example, at least one or more of a Low Power Wake Up Signal (LP-WUS), a Low Power Synchronization Signal (LP-SS). Moreover, alternatively or in addition, a low power radio reference signal may include any reference signal that is suitable for performing measurements, such as any reference signals, which are defined by a standard. For example, a SSB or a CSI-RS may be used as a reference signal suitable for a measurement. In general, any signal that is suitable for performing measurements may be used as a low power radio reference signal.

An exemplary Low Power Radio (LR) operation may include measurements based on LP-WUS and/or LP-SS, or any legacy reference signal, such as, for example, one or more of a Primary Synchronization Signal (PSS), a Secondary Synchronization Signal (SSS), a physical broadcast channel demodulation reference signal (PBCH DMRS), in any of an RRC inactive mode or an RRC idle mode. Moreover, the LR operation may include measurements based on LP-WUS and/or LP-SS, or any legacy reference signal, such as PSS/SSS/PBCH DMRS in an RRC connected mode. A time and/or frequency tracing may be performed in the LR operation using one or more of a SSB, a CSI-RS, a LP-WUS or a LP-SS. In such an exemplary LR operation a control channel and/or a control signal, such as, for example, an LP-WUS indicating PDCCH monitoring or a paging signal, may be monitored.

In general, the terms "low power" (LP) and "low power radio" (LR) are used as synonyms with throughout the description.

Such a LR operation may be performed as an alternative and/or in addition to a Main Radio operation (MR). For example, a MR operation and a LR operation may use different respective hardware in an UE. For example, a MR operation and a LR operation may use a same hardware in an UE. For example, an UE may comprise a LR transceiver, a LR circuitry, a MR transceiver, and a MR circuitry. For example, said LR transceiver and said LR circuitry may perform the low power operation, whereas the MR transceiver and the MR circuitry may perform the main operation. For example, the LR circuitry and the MR circuitry may be included in a same physical circuity.

In any of said exemplary cases, a MR operation and a LR operation may provide different functionalities of an UE in a respective operational mode. For example, an UE while being in an LR operation mode may perform one or more of the functionalities that are also available in a MR operation mode. The terms "operation", "operational mode", "mode", "state" and "operational state" are used as synonyms with respect to the low power radio and/or the main radio throughout the description.

An exemplary Main Radio (MR) operation may include measurements based on SSBs and/or CSI-RS in any of an RRC inactive mode or an RRC idle mode. Moreover, the MR operation may include measurements based on SSBs and/or CSI-RS in an RRC connected mode. A time and/or frequency tracing may be performed in the MR operation using one or more of a SSB, a CSI-RS, a LP-WUS (Low Power Wake Up Signal) or a LP-SS (Low Power Synchronization Signal). In such an exemplary MR operation a control channel, such as, for example, PDCCH, may be monitored.

In other words, a MR reference signal may include at least one or more of a SSBs and a CSI-RS.

The present invention is not limited by such exemplary MR and LR operations. MR and LR operation, especially time/frequency tracking and control channels monitoring, may or may not be explicitly reflected in a standard specification depending on whether MR or LR hardware to operate one or more of the above function(s), but may only nominate which channel, signal and/or reference signal to receive/monitor/measure. Which channel to be measure, e.g., by RRM measurement, may imply MR or LR operation of one or more other channels.

For example, in LR operation, an UE may use specific low power reference signals. In other words, when the UE performs the low power operation, the receiving of the reference signal includes a receiving of the low power radio (LR) reference signal.

Such a low-power reference signal may include a more simplified waveform (relatively to a non-low-power reference signal). For example, an on-off keying (OOK) modulation and/or a frequency-shift keying (FSK) modulation allow for a lower complexity receiver (relatively to a MR receiver) to receive and monitor said low-power reference signal. Such a low-power reference signal may be, for example, a LP-WUS, which may indicate that UE is to perform a MR operation. Such a low power reference signal may be, for example, LP-SS, for time/frequency domain tracking/synchronization and/or RRM measurement.

When the UE does not perform the low power operation, the receiving of the reference signal includes a receiving of a main radio (MR), reference signal. For example, when not performing a low power operation, the UE may perform a MR operation, a combination of MR and LR operation, or the like.

For example, such a MR reference signal may be a SSB and/or a CSI-RS. The present disclosure is not limited to these exemplary reference signals. In general, any other suitable reference signal may be used for performing a measurement.

A switching between LR operation and not LR operation may be performed when a preconfigured condition is fulfilled.

A transitioning between LR operation and MR operation is exemplarily illustrated as a state machine of two states in **Fig. 2****.** The two states are represented by the LR operation 1110 and the MR operation 1120. When a first preconfigured condition is fulfilled, the UE transitions 1140 from the MR operation to the LR operation. For example, the first preconfigured condition may include whether a MR measurement result is higher than a preconfigured threshold. Such a threshold may be defined by a standard, a configuration indication received by the UE, or the like.

For example, such a transitioning to the LR operation may save UE power by offloading measurement to LR operation when the channel condition is good, e.g. not cell edge or the like.

When a second preconfigured condition is fulfilled, the UE according to the exemplary implementation in **Fig. 2** may transition 1130 from the LR operation to the MR operation. For example, the second preconfigured condition may include whether a LR measurement result is lower than a predefined threshold, which may be different from the threshold for the transitioning from the MR operation to the LR operation. Similarly as above, such a threshold for the transitioning from the LR operation to the MR operation may be defined by a standard, a configuration that is received by the UE, or the like.

For example, such a transitioning to the MR operation may ensure an accuracy performance of a measurement. Thus, by switching of the states based on a preconfigured condition facilitates UE power saving and maintaining acceptable measurement performance.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource*, and SSB-*Index.*
2) List of *CSI-ResourceConfig* IEs
   - Different *CSI-ResourceConfig* in the list can contain one or more different RS resource sets, chosen from List element 1). This may include NZP-CSI-RS-*ResourceSet*, *CSI-IM-ResourceSet*, and/or *CSI-SSB-ResourceSet*, respectively identified by suitable IDs (see e.g. *NZP-CSI-RS-ResourceSetld*, *CSI-IM-ResourceSetld*, and/or *CSI-SSB-ResourceSetld)*
3) List of CSI-ReportConfig IEs.
   - Different *CSI-ReportConfig* in the list configures different CSI report instance. This is the Information Element which links the reporting configuration of this *CSI-ReportConfig* (such as by PUCCH or PUSCH) to the measurement resource sets (i.e. one *CSI-ResourceConfig* in the above List element 2). *CSI-ResourceConfigID*, being included in the *CSI-ReportConfig* IE, identifies a *CSI-ResourceConfig* IE to be used.

Measurements and reporting can be carried out on a periodic, semi-periodic or aperiodic basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned *SSB-Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config*)
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig*, *CSI-MeasConfig*, *CSI-ReportConfig*, *CSI-ResourceConfig*, *NZP-CSI-RS-Resource*, and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of IEs for defining measurement and report according to the CSI framework includes:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

Details for said framework are provided, for example, in 3GPP TS 38.331, section 6.3.2.

### Signal interference

Interference in wireless communication, such as 5G NR (New Radio), refers to disruption of a communication channel due to other signals, degrading performance and quality. This interference can originate from various sources and takes several forms, each with distinct characteristics and impacts.

Co-channel interference (CCI) happens when multiple transmitters operate on the same frequency channel. This leads to a significant reduction in signal quality and an increase in error rates. Adjacent channel interference (ACI) occurs when signals from neighboring frequency channels overlap, causing a decrease in the Signal-to-Interference-plus-Noise Ratio (SINR). Inter-symbol interference (ISI) results from symbols overlapping with subsequent symbols, typically due to multipath propagation where signals reflect off obstacles and arrive at different times. This causes distortion in the received signal and increases error rates.

Interference can come from both external and internal sources. External sources include natural phenomena like atmospheric noise and cosmic noise, as well as man-made sources such as other communication systems and industrial equipment. Internal sources of interference include network components like base stations and user equipment, as well as multipath propagation caused by reflections from buildings, terrain, and other obstacles.

The present disclosure in particular addresses interference by transmissions of other sources like user equipments and/or base stations in the framework of low-power signal communication.

### Embodiments

The present disclosure addresses interference wireless communication networks, wherein low-power signals are transmitted, particularly 5G and future technologies.

In the following, user equipments, UEs, network nodes (e.g. base stations and intermediate nodes) and procedures of communication will, particularly, be described for the new radio access technology envisaged for 5G mobile communication systems, but may also be used in LTE mobile communication systems, 6G mobile communication system and other wireless communication systems including wireless local area networks or the like. Different implementations and variants will be exemplified.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or "network node" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The present disclosure provides a network node and a user equipment as well as corresponding methods and programs. For instance, an integrated circuit can control a process of a UE or base station.

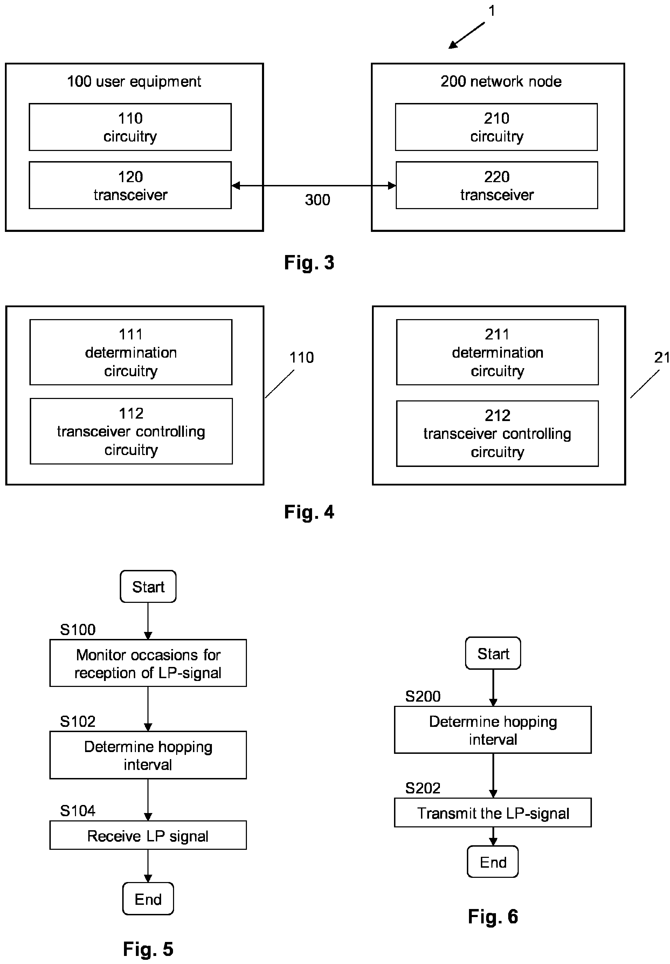

As illustrated in **Fig. 3****,** a user equipment 100 and a network node 200 may communicate with each other over a wireless channel 300 in a wireless communication system 1. For instance, the user equipment 100 may be a NR user equipment, and the network node 200 may be a base station or scheduling node such as an eNB, or a NR gNB, in particular a gNB in a NR wireless communication system. The communication system 1 may be a wireless communication system in accordance with the technical specifications of 5G, in particular a NR communication system. However, the present disclosure is not limited to 3GPP NR and may also be applied to other wireless or cellular systems.

**Fig. 3** illustrates a general, simplified and exemplary block diagram of a user equipment 100 (also termed communication device) and a network node 200. However, in general, a scheduling device may also be a terminal in case of a sidelink connection between two terminals. Moreover, in particular with respect to the use cases of URLLC; eMBB, and mMTC, the user equipment 100 may also be a sensor device, a wearable device, or a connected vehicle, or a controller of an automated machine in an industrial factory. Further, a user equipment 100 may be able to function as a relay between network node 200 and another communication device (e.g. the disclosure is not limited to communication "terminals" or user "terminals").

The UE 100 and network node 200 are communicating with each other over a (wireless) physical channel 300 respectively using their transceivers 120 (UE side) and 220 (network node side). Together, the network node 200 and the UE 100 form the communication system 1. The communication system 1 may further include other entities such as those shown in **Fig. 1****.**

As shown in **Fig. 3** (left-hand side), according to an exemplary embodiment, a user equipment (UE) 100 is provided. The UE 100 comprises a transceiver 110 and circuitry 120. The exemplary transceiver 120 in Fig. 3 may include a receiver and/or a transmitter.

**Fig. 4** (left-hand side) shows an exemplary functional structure of the circuitry 110. In particular, the circuitry 110 may include determination circuitry 111 and transceiver controlling circuitry 112. The determination circuitry 111 may be configured to perform any of below-described determinations. The transceiver controlling circuitry 112 may control the transceiver 120 to perform respective operations.

As also shown in **Fig. 3** (right-hand side), according to an embodiment, a network node 200 is provided. The network node 200 comprises a transceiver 210 and a circuitry 220. The exemplary transceiver 210 in Fig. 3 may comprise a transmitter and/or a receiver.

**Fig. 4** (right-hand side) shows an exemplary functional structure of the circuitry 210. In particular, the circuitry 210 may include determination circuitry 211 and transceiver controlling circuitry 212. The determination circuitry 211 may be configured to perform any of below-mentioned determinations. The transceiver controlling circuitry 212 may control the transceiver 220 to perform respective operations.

In the following description, an occasion may refer to a specific, determined, defined, indicated, configured, predetermined, or predefined time interval or specific, determined, defined, indicated, configured, predetermined, or predefined resources within a transmission schedule, during which a particular signal or message is transmitted and/or expected to be received, e.g. ensuring synchronized communication and efficient resource management between the network and user equipment. In other words, an occasion is a designated time period or designated resources when a specific signal or message is sent and/or anticipated to be received.

Further, a sequence may refer to an ordered series of bits, where each bit is represented by the presence (on) or absence (off) of a signal in case on OOK signal. This sequence of Off- and On-periods may encode information being transmitted in a communication system.

Further, a sequence may also refer to an additional, superimposed series of signals or data patterns transmitted alongside a primary signal. For example, if the low-power signal is an OOK signal, a sequence may be overlaid within an On-duration of the OOK signal. For instance, the sequence may be an OFDM sequence.

Further, a hopping interval may relate to a certain time duration during which a sequence is not changed. The hopping interval may be specified by a number of occasion, a number of On-durations of an OOK signal, a time duration, or the like.

### Embodiment 1

In an embodiment, a UE 100 as illustrated in Figs. 3 and 4 (left hand side) is provided. The transceiver 120, in operation, monitors a plurality of occasions for reception of a low-power signal indicating at least one sequence. The circuitry 120, in operation, determines a hopping interval for the at least one sequence of the low-power signal, wherein the at least one sequence changes according to a rule at the hopping interval. The transceiver 110 further receives, in operation, on one of the plurality of occasions, the low-power signal.

**Fig. 5** illustrates the steps of a method performed by the UE 100 according to the embodiment. The method comprises monitoring S100 occasions for reception of a low-power signal indicating at least one sequence. Further, in step S102, a hopping interval is determined for the at least one sequence of the low-power signal, wherein the at least one sequence changes according to a rule at the hopping interval. In step S104, the low-power signal is received on one of the plurality of occasions.

According to the embodiment, the UE 100 monitors each occasion for reception of the low-power signal, wherein an expected low-power signal may be determined by the UE 100 and used for detection of the low-power signal within the occasions. The expected signal may be determined by the UE 100 according to the determined hopping interval and the rule for determination of the respective next sequence. When the low-power signal is received by the UE 100, the UE 100 may perform corresponding operations like synchronization, channel measurement, starting monitoring of a control channel, or the like, depending on the nature of the low-power signal and/or the specific implementation.

In a variation, the low-power signal indicates one sequence as an On-Off-Keying, OOK, based binary sequence in time domain.

In other words, the sequence may be represented by the pattern of On- and Off durations of the OOK signal.

In a variation, the circuitry 110, in operation, determines the hopping interval corresponding to N occasions, N being a fixed or configured natural number equal to or greater than one, wherein the sequence changes for every N occasions according to the rule.

For example, the hopping interval may correspond to one occasion. That is, the sequence (expected sequence) may change for each of the occasions for transmission of the low-power signal.

For example, the hopping interval may correspond to a natural number N equal to or larger than two. That is, the sequence (expected sequence) may change after every N occasions for transmission of the low-power signal.

It is to be noted that the number of occasions, determining the hopping interval, may be fixed (e.g. in a standard), configured or indicated to the UE 100.

In a variation, the circuitry 110, in operation, determines the hopping interval corresponding to a fixed or configured time duration, wherein the sequence changes after each expiration of said time duration.

That is, rather than the hopping interval being represented by a number of occasion, a certain time duration may represent the hopping interval. Hence, the sequence changes after each expiration of said time duration.

In a variation, the low-power signal is a low-power synchronization signal, LP-SS, which is optionally received in a low power operation of the UE 100.

In a variation, the low-power signal is an On-Off-Keying, OOK, based signal in time domain. Further, the low-power signal indicates the at least one sequence in time domain or in frequency domain respectively overlaid on at least one On-duration of the low-power signal.

In other words, rather than being represented by the On- and Off-durations of the OOK signal, a signal may be overlaid on On-periods of an OOK signal. This overlaid sequence may be a sequence in time domain or in frequency domain. In this respect, it is to be noted that a sequence may be overlaid on one or more On-durations of the OOK signal. That is, at least one On-duration may further carry the overlaid sequence. However, two, or more and, also, all On-durations may carry an overlaid sequence.

In a variation, similar to what is described above, the circuitry 110, in operation determines the hopping interval corresponding to N On-durations of the low-power signal, N being a fixed or configured natural number equal to or greater than one, wherein the sequence changes for every N On-durations of the low-power signal according to the predetermined rule.

In other words, the hopping interval is determined with respect to the number of On-durations. That is, the sequence changes after N On-durations. N may be one, i.e. the overlaid sequence may change for every On-duration. However, N may be greater than one, i.e. the overlaid sequence mac change only after each N On-durations.

In a variation, the circuitry 110, in operation determines the hopping interval corresponding to N occasions, N being a fixed or configured natural number equal to or greater than one, wherein the sequence changes for every N occasion according to the rule.

In other words, rather than hanging depending on the number of On-durations, the sequence may change only after N occasions of the low-power signal, similarly to what is described above.

In a variation, the circuitry 110, in operation determines the hopping interval corresponding to a fixed or configured time duration, wherein the at least one sequence changes after each expiration of said time duration.

In a variation, the low power signal carries information, indicated by one of at least two sequences; and the circuitry 110, in operation, determines the at least two sequences for each of the occasions and obtains the information by determining which of the at least two sequences is indicated by the received low-power signal.

That is, the UE 100 may expect an On-duration of an OOK based low-power signal with at least one sequence overlaid on at least On-duration to carry one of a plurality of sequences. Depending on the number of potential sequences that may be overlaid on an On-duration, the low-power signal may carry information of a corresponding number of bits. For example, if the UE 100 expects one of two potential sequences to be overlaid on an On-duration of the low-power signal, the low-power signal carries one bit of information, and the circuitry 110, in operation, may determine which of the potential sequences is overlaid on an On-duration, thereby obtaining the carried bit value. The information carries by the low-power signal in terms of overlaid sequences is not particularly limited, and may be any information depending on the implementation.

In a variation, the low-power signal is a low-power wake-up signal, LP-WUS, which is optionally received in a low power operation of the UE 100.

In a variation, the circuitry 110, in operation, initiates monitoring of a control channel according to the LP-WUS.

The circuitry 110, in operation, may initiate monitoring of a data channel according to the LP-WUS.

Further, a network node 200 as described above (cf. Figs. 4 and 5) is provided. The circuitry 220, in operation, determines a hopping interval for at least one sequence of a low-power signal, indicating the at least one sequence, for transmission on one of a plurality of occasions, wherein the at least one sequence changes according to a rule at the hopping interval. The transceiver 210, in operation, transmits the low-power signal on the one of the plurality of occasions.

**Fig. 6** illustrates the steps of a method performed by the network node 200 according to the embodiment. The method comprises determining S200 a hopping interval for at least one sequence of a low-power signal, indicating the at least one sequence, for transmission on one of a plurality of occasions, wherein the at least one sequence changes according to a rule at the hopping interval. In step S202, the low-power signal is transmitted on the one of the plurality of occasions.

The network node 200 may further perform operations according and/or corresponding to the operations of the UE 100 as described above. That is, the network node may configured the UE 100 with a hopping interval, indicate a hopping interval, and the like.

### Embodiment 2

In another embodiment, a UE 100 as illustrated in Figs. 3 and 4 (left hand side) is provided. The transceiver 110, in operation, monitors a plurality of occasions for reception of a low-power signal indicating at least one sequence. The circuitry 120, in operation, determines the at least one sequence for each of the occasions, which changes at a hopping interval. The transceiver 110, in operation, receives, on one of the plurality of occasions, the low-power signal according to the respective determined at least one sequence.

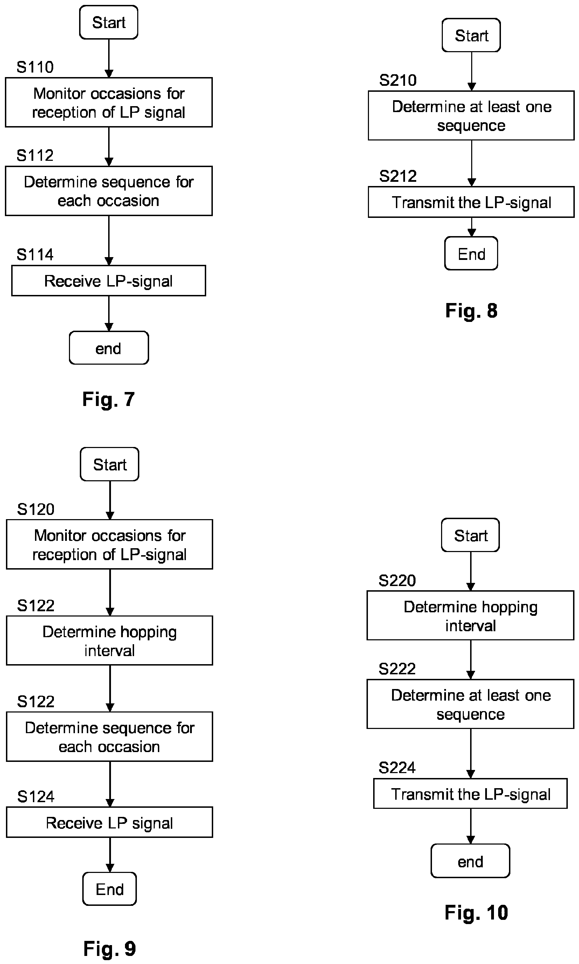

**Fig. 7** illustrates the steps of a method performed by the UE 100 according to the embodiment. The method comprises monitoring S110 occasions for reception of a low-power signal indicating at least one sequence. Further, in step S112, the at least one sequence is determined for each of the occasions, which changes at a hopping interval. In step S114, the low-power signal according to the respective determined at least one sequence is received on one of the plurality of occasions.

According to the embodiment, the UE 100 monitors each occasion for reception of the low-power signal, wherein an expected low-power signal is be determined by the UE 100 and used for detection of the low-power signal within the occasions. The expected signal may be determined by the UE 100 according to a hopping interval, which may be fixed, determined, predetermined, or configured, and a certain rule for determination of the respective next sequence. When the low-power signal is received by the UE 100, the UE 100 may perform corresponding operations like synchronization, channel measurement, starting monitoring of a control channel, or the like, depending on the nature of the low-power signal and/or the specific implementation.

In a variation, the low-power signal indicates one sequence as an On-Off-Keying, OOK, based binary sequence in time domain.

In other words, the sequence may be represented by the pattern of On- and Off durations of the OOK signal.

In another variation, the low-power signal is an On-Off-Keying, OOK, based signal in time domain, and the low-power signal indicates the at least one sequence in time domain or in frequency domain respectively overlaid on at least one On-duration of the low-power signal.

In other words, rather than being represented by the On- and Off-durations of the OOK signal, a signal may be overlaid on On-periods of an OOK signal. This overlaid sequence may be a sequence in time domain or in frequency domain. In this respect, it is to be noted that a sequence may be overlaid on one or more On-durations of the OOK signal. That is, at least one On-duration may further carry the overlaid sequence. However, two, or more and, also, all On-durations may carry an overlaid sequence.

In a variation, the circuitry 110, in operation, determines, after expiration of each hopping interval, a new sequence by selecting a sequence from among a plurality of candidate sequences according to a selection rule.

In other words, from among multiple potential candidate sequences, the circuitry 110 may select one candidate sequence as a next candidate sequence, which is determined after expiration of the hopping interval. The next sequence may be a sequence different from a previous sequence. In this variation, the rule for determination of the sequence after expiration of the hopping interval is a selection rule, i.e. a rule for determining which of the candidate sequences is to be selected from the plurality of candidate sequences.

For example, the selection rule is based on at least one of a previous sequence from among the plurality of candidate sequences, a fixed, configured, or indicated hopping step value, an identifier of a cell serving the UE 100, an identifier of the UE 100, and a timing index of the occasion for reception of the low-power signal.

The candidate sequences may be fixed (e.g. in a standard), configured or indicated (e.g. by higher layer signaling).

The hopping step value may be a numerical value to be used for determining a next sequence based on a previous sequence. For example, if the previous sequence is associated with an index S(i), the index of the next sequence may be [S(i)+m] mod M, with m being the hopping step and M being the total number of candidate sequences available. However, the present disclosure is not limited thereto, and the next sequence may be determined using a hopping step in a different specific implementation.

A cell ID in wireless communication networks uniquely identifies a specific cell within a base station. For instance, in LTE, a cell ID might be part of the E-UTRAN Cell Identifier (ECI), while in 5G NR, it could be a component of the NR Cell Identity (NCI). These identifiers ensure devices are correctly linked to the appropriate cell for seamless communication.

A UE identifier (UE ID) may be an identifier uniquely distinguishes a UE within the communication network. Examples include IMSI, IMEI, and temporary identifiers like GUTI. However, the present disclosure is not limited to any specific implementation of a UE ID, as long as the UE uniquely identifies the UE within the communication network.

A timing index specifies when a signal transmission occurs or may be expected. Examples include slot index, symbol index, and frame index or the like.

That is, from among the above-mentioned values, one or any combination thereof may be used as input to the selection rule, which provides the next sequence based on said input. It is to be particularly noted that the previous sequence index may or may not form part of the input to the selection rule. In other words, which next sequence is determined may or may not depend on the previous sequence.

In a variation, the circuitry 110, in operation, determines the sequence by selecting the sequence from among a subset of the plurality of candidate sequences.

In other words, the UE 100 may not select the next sequence from among all available candidate sequences, but only from a subset thereof. The subset of the plurality of candidate sequences may be determined by the UE 100, for instance based on any of above-mentioned inputs to the selection rule. For example, the UE 100 may select the next sequence from a subset according to certain splitting of the plurality of rules into two or more groups of candidate sequences. The grouping of the candidate sequences may be based on, for example, the UE ID and/or the cell ID. Exemplarily, a UE 100 having an odd UE ID may select the sequence from candidate sequences having an odd sequence index, and a UE 100 having an even UE ID may select the sequence from candidate sequences having an even sequence index. However, this example is not to be considered limiting.

In particular, the UE 100 may be configured with the subset of the candidate sequences. In other words, a network node 200 may indicate to the UE 100 from which candidate sequences the UE 100 may select the sequences to be expected.

Further, a mapping relation indicating a mapping between cell IDs and subsets of candidate sequences may be utilized. Such a mapping relation may be fixed, configured, or indicated to the UE 100.

In a variation, the plurality of candidate sequences is fixed, configured or indicated to the UE 100.

In a variation, the low power signal carries information, indicated by one of at least two sequences. The circuitry 110, in operation, determines the at least two sequences for each of the occasions, and obtains the information by determining which of the at least two sequences is indicated by the received low-power signal.

That is, the UE 100 may expect an On-duration of an OOK based low-power signal with at least one sequence overlaid on at least On-duration to carry one of a plurality of sequences. Depending on the number of potential sequences that may be overlaid on an On-duration, the low-power signal may carry information of a corresponding number of bits. For example, if the UE 100 expects one of two potential sequences to be overlaid on an On-duration of the low-power signal, the low-power signal carries one bit of information, and the circuitry 110, in operation, may determine which of the potential sequences is overlaid on an On-duration, thereby obtaining the carried bit value. The information carries by the low-power signal in terms of overlaid sequences is not particularly limited, and may be any information depending on the implementation.

In a variation, the low-power signal is a low-power synchronization signal, LP-SS, which may be received in a low power operation of the UE.

The circuitry 110, in operation, may perform at least one of channel synchronization and channel quality measurement based on the LP-SS.

In a variation, the low-power signal is a low-power wake-up signal, LP-WUS, which is optionally received in a low power operation of the UE 100.

In a variation, the circuitry 110, in operation, initiates monitoring of a control channel according to the LP-WUS.

The circuitry 110, in operation, may initiate monitoring of a data channel according to the LP-WUS.

Further, a network node 200 as described above (cf. Figs. 4 and 5) is provided. The circuitry 220, in operation, determines at least one sequence of a low-power signal, indicating the at least one sequence, for transmission on one of a plurality of occasions, wherein the at least one sequence chances at a predetermined hopping interval. The transceiver 210, in operation, transmits, on the one of the plurality of occasions, the low-power signal according to the respective determined at least one sequence.

**Fig. 8** illustrates the steps of a method performed by the network node 200 according to the embodiment. The method comprises determining S210 at least one sequence of a low-power signal, indicating the at least one sequence, for transmission on one of a plurality of occasions, wherein the at least one sequence chances at a predetermined hopping interval. In step S212, the low-power signal according to the respective determined at least one sequence is transmitted on the one of the plurality of occasions.

The network node 200 may further perform operations according to the operations of the UE 100 as described above. That is, the network node may configured the UE 100 with a hopping interval, indicate a hopping interval, and the like.

### Embodiment 3

In another embodiment, the transceiver 110, in operation, monitors a plurality of occasions for reception of a low-power signal indicating at least one sequence. The circuitry 120, in operation, determines a hopping interval for the at least one sequence of the low-power signal and, further, determines the at least one sequence for each of the occasions, wherein the at least one sequence changes at the determined hopping interval. The transceiver, in operation, receives, on one of the plurality of occasions, the low power signal according to the respective determined at least one sequence.

**Fig. 9** illustrates the steps of a method performed by the UE 100 according to the embodiment. The method comprises monitoring S120 occasions for reception of a low-power signal indicating at least one sequence. Further, in step S112, a hopping interval is determined for the at least one sequence of the low-power signal. In step S114, the at least one sequence is determined for each of the occasions, which changes at a predetermined hopping interval. In step S116, the low-power signal according to the respective determined at least one sequence is received on one of the plurality of occasions.

That is, the UE 100 may perform any of the operations described for embodiment 1 for determining the hopping interval and, in addition, perform any of the operations described fro embodiment 2 for determining the sequence(s).

In another embodiment, a network node 200 is provided. The circuitry 220, in operation, determines a hopping interval for at least one sequence of a low-power signal, indicating the at least one sequence, for transmission on one of a plurality of occasions, wherein the at least one sequence changes according to a rule at the hopping interval. The circuitry 220 further, determines the at least one sequence of the low-power signal. The transceiver 210, in operation, transmits the low-power signal on the one of the plurality of occasions.

**Fig. 10** illustrates the steps of a method performed by the network node 200 according to the embodiment. The method comprises determining S220 a hopping interval for at least one sequence of a low-power signal, indicating the at least one sequence, for transmission on one of a plurality of occasions, wherein the at least one sequence changes according to a rule at the hopping interval. Further, the method comprises determining S222 the at least one sequence of the low-power signal and transmitting S224 the low power signal on the one of the plurality of occasions.

That is, the network node 200 100 may perform any of the operations described for embodiment 1 for determining the hopping interval and, in addition, perform any of the operations described fro embodiment 2 for determining the sequence(s).

In the following, specific embodiments 4 to 10 of the aspects described above in the framework of embodiments 1 to 3 are provided in detail. However, the present disclosure is not limited to any one of the following detailed embodiments. Further, aspects described in the following embodiments may be combined with each other.

### Embodiment 4

Embodiment 4 illustrates a specific implementation of the determination of a hopping interval. In this embodiment, the low-power signal indicates one sequence as an On-Off-Keying, OOK, based binary sequence in time domain. The hopping interval is determined as corresponding to a certain number N of occasions for transmission of the low-power signal. N is a natural number equal to or greater than one and the sequence changes for every N occasions according to a certain rule. In this respect, it is to be noted that the rule may be fixed, determined by the UE 100, or configured.

The sequence in this embodiment is a binary sequence that is transmitted as an OOK keying signal in at least one of the occasions.

For example, the low-power signal may be a low-power synchronization signal, LP-SS, that may be received during a low-power operation of the UE. In response to the reception of the LP-SS, the UE 100 may perform channel synchronization and/or channel quality measurement based on the LP-SS.

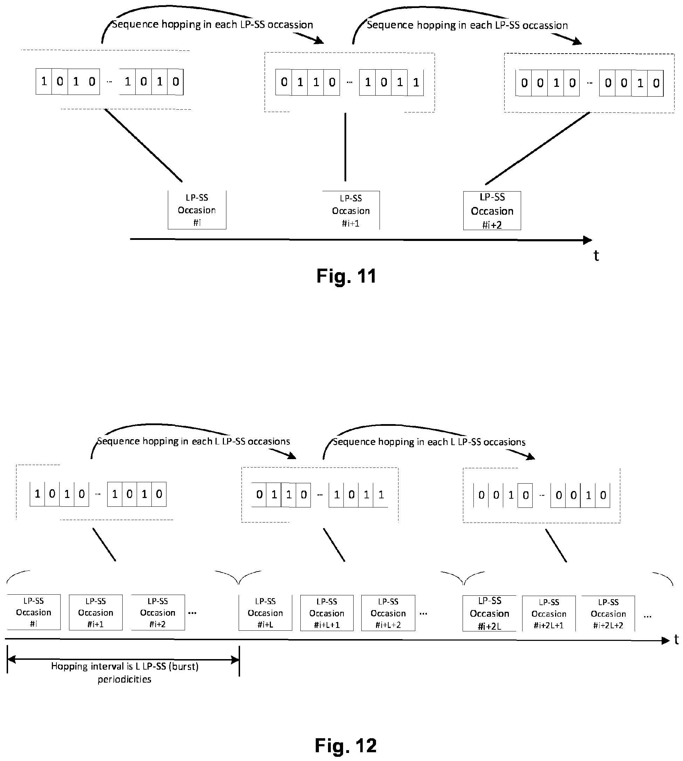

**Fig. 11** illustrates a hopping interval, which corresponds to one occasion. In other words, the sequence is changed for each occasion. That is, the UE 100 expects a different sequence for every occasion for transmission of the LP-SS. When monitoring the occasions, the UE 100 may analyze an output of its transceiver 120 so as to detect the expected sequence. For example, the circuitry 110 may perform a correlation analysis of a received signal, using the expected sequence in order to detect the expected sequence within the output provided by the transceiver 120.

With this approach, interference of the expected signal with other signals transmitted, e.g. within another cell, may be reduced due to an increased randomization of the expected signals. In other words, the expected signal may be successfully received.

**Fig. 12** illustrates a hopping interval, which corresponds to multiple occasions. In other words, the sequence is changed after a specific number N of occasions. That is, the UE 100 expects the same sequence for N consecutive occasions and expects a changed sequence or the next N consecutive occasions, and so on.

It is to be noted that the number of occasions N may be fixed, e.g. in a standard, or may be configured by higher layer signaling (e.g. SIB). That is, the UE 100 may receive an indicator indicating the number of occasions according to the hopping interval and determine the hopping interval accordingly.

With this approach, interference of the expected signal with other signals transmitted, e.g. within another cell, may be reduced due to an increased randomization of the expected signals while at the same time the processing amount by the UE 100 may be balanced. In other words, with this approach, randomization and the complexity of UE processing may be balanced.

As an alternative to the above, the hopping interval may correspond to a certain time duration. In other words, the sequence changes after each expiration of said time duration. Just as the number of occasions as described above, the time duration may be fixed or configured. For implementation of the hopping interval, the UE 100 may initiate a timer having the respective time duration, change the sequence according to the rule when the timer has expired and restart the timer after its expiration.

It is to be noted that the determination of the sequences expected in respective occasions is not particularly limited and may be any determination approach, e.g. as detailed in the following embodiments.

Further, it is to be noted that an LP-SS may be measured/received by UEs 100 in RRC IDLE/INACTIVE as well as UEs in RRC CONNECTED states. However, the hopping interval may be configured by RRC. However, the present disclosure is not limited thereto.

### Embodiment 5

Embodiment 5 illustrates a specific implementation of the determination of the sequence, which changes after each hopping interval. In this respect, it is noted that the hopping interval may be fixed, set, determined or configured as described in the other embodiments.

In this embodiment, just as in Embodiment 4, the low-power signal indicates one sequence as an On-Off-Keying, OOK, based binary sequence in time domain. After expiration of each hopping interval, a new sequence is determined by selecting a sequence from among a plurality of candidate sequences according to a selection rule, wherein the selection rule is based on a previous sequence (from among the candidate sequences) and a fixed, configured or indicated hopping step value.

For this purpose, the UE 100 is configured with the plurality of candidate sequences. Alternatively, for example, the plurality of candidate sequences may be fixed, e.g. in a standard. When a sequence index of a sequence expected in an occasion i is given by S(i), a sequence index in occasion i+n (n being the hopping interval in terms of a number of occasions) may be given by S(i+n)=[S(i) + m] mod M. In this selection rule, m denotes a hopping step and M denotes the total number of candidate sequences usable for the UE.

For example, if the plurality of candidate sequences comprises a total of M=8 candidate sequences (indices 0 to 15) and the hopping step is 2, the order of the indices of the sequences selected by the UE 100 is 0, 2, 4, 6, 0, 2, ... It is to be noted that an initial candidate sequence may be fixed, configured or indicated to the UE 100. Further, the hopping step m may be fixed (e.g. in a standard), configured or indicated to the UE 100.

A fixed hopping step does not require any signaling and allows for a simple implementation without a large processing amount. Although a configured or indicated hopping step m may have a large impact on a potential standard, it may provide for improved flexibility in controlling the interference randomization.

### Embodiment 6

Embodiment 6 illustrates a specific implementation of the determination of the sequence, which changes after each hopping interval. In this respect, it is noted that the hopping interval may be fixed, set, determined or configured as described in the other embodiments, in particular embodiment 4.

In this embodiment, just as in Embodiments 4 and 5, the low-power signal indicates one sequence as an On-Off-Keying, OOK, based binary sequence in time domain. After expiration of each hopping interval, a new sequence is determined by selecting a sequence from among a plurality of candidate sequences according to a selection rule, wherein the selection rule is based on a previous sequence (from among the candidate sequences) and a fixed, configured or indicated hopping step value.

As in embodiment 5, the UE 100 is configured with the plurality of candidate sequences. Alternatively, for example, the plurality of candidate sequences may be fixed, e.g. in a standard. When a sequence index of a sequence expected in an occasion i is given by S(i), a sequence index in occasion i+n (n being the hopping interval in terms of a number of occasions) may be given by S(i+n)=[S(i) + m] mod M. In this selection rule, S(i+n) denotes the sequence index for occasion i+n, m denotes a hopping step and M denotes the total number of candidate sequences usable for the UE.

In this embodiment, the hopping step m is determined by the UE 100 using an identifier of a cell currently serving the UE 100. In other words, the hopping step depends on said cell identifier (cell ID). For example, the hopping step m may be calculated using the cell ID.

In an exemplary implementation, a mapping relation mapping a cell ID to a hopping step m may be utilized. Such a mapping relation may be given, for example, by a function m(cell_id)=cell_id mod K, wherein K is a fixed, configured or indicated natural number equal to or larger than two. For example, K may be 2, 3, or 4. However, the present disclosure is not limited to any specific K. In a further exemplary implementation, the function mapping the cell ID to the hopping step m may be given by m(cell_id) = k + cell_id mod K, with k being a fixed, configured or indicated minimum hopping step equal to or larger than one. With such a mapping relation including the minimum hopping step k, a situation where, for certain cell IDs, a hopping step of zero is determined, i.e. sequence hopping is not performed, may be prevented.

Although specific examples of the relation mapping a cell ID to a hopping step m(cell_id) are provided above, the present disclosure is not limited to any specific implementation, provided that each given cell ID is mapped to a single hopping step m.

With the approach of the present embodiment, mitigation of inter-cell interference may be improved. This is due to the fact that the chance that different cell IDs result in a same hopping step is reduced. In other words, adjacent cells are more likely to result in different hopping steps, thereby improving randomization and reducing inter-cell interference.

### Embodiment 7

Embodiment 7 illustrates a specific implementation of the determination of the sequence, which changes after each hopping interval. In this respect, it is noted that the hopping interval may be fixed, set, determined or configured as described in the other embodiments, in particular embodiment 4.

In this embodiment, just as in Embodiments 4 to 6, the low-power signal indicates one sequence as an On-Off-Keying, OOK, based binary sequence in time domain. After expiration of each hopping interval, a new sequence is determined by selecting a sequence from among a plurality of candidate sequences according to a selection rule, wherein the selection rule is based on a previous sequence (from among the candidate sequences) and a fixed, configured or indicated hopping step value.

As in embodiments 5 and 6, the UE 100 is configured with the plurality of candidate sequences. Alternatively, for example, the plurality of candidate sequences may be fixed, e.g. in a standard.

The plurality of candidate sequences may include two or more subsets/groups of candidate sequences. The subsets/groups of candidate sequences may be fixed (e.g. in a standard), configured or indicated to the UE 100. In other words, the grouping of the plurality of candidate sequences, i.e. the separation of the plurality of candidate sequences into the two or more subsets/groups may be fixed (e.g. in a standard), configured or indicated to the UE 100.

When a sequence index of a sequence of group G expected in an occasion i is given by S_{G}(i), a sequence index in occasion i+n (n being the hopping interval in terms of a number of occasions) may be given by S_{G}(i+n)=[S_{G}(i) + m] mod M_{G}. In this selection rule, S(i+n) denotes the sequence index for occasion i+n, m denotes a hopping step and M_{C} denotes the total number of candidate sequences usable for the UE 100 of the current serving cell.

In this embodiment, the UE 100 determines the sequence by selecting a sequence from among a subset of the plurality of candidate sequences. In other words, the selection is limited to a group of candidate sequences from among all candidate sequences of the plurality of sequences.

For example, the subset of the plurality of candidate sequences is determined based on an identifier of a cell serving the UE 100.

That is, the UE 100 may determine the subset/group to be used for selection of the sequence using a cell ID of a current serving cell. For this purpose, when each group is associated with a group index G and exhibits a magnitude M_{G}, the UE 100 may use a mapping relation mapping a current cell ID to a group index G. It is to be noted that the magnitude M_{G} of the groups may be equal or different among the groups.

For example, in a case where there are two groups of candidate sequences (G = 0 or 1), each cell ID may be mapped to one of said two groups. For example, the group index may be a function of the cell ID G=G(cell_ID). For instance, the UE 100 may determine the group to be used for sequence determination using a mapping relation G(cell_ID) = cell ID mod 2. In this case, an even cell ID is mapped to group 0 and an odd cell ID is mapped to group 1. However, the present disclosure is not limited to this specific example, and any relation mapping a cell ID to a group index G may be utilized. In particular, the plurality of candidate sequences may comprise three or more subsets/groups of candidate sequences, and a relation providing, for a given cell ID of a current serving cell, a group index G may be utilized.

With this approach, UEs 100 served by difference cells may select respective sequences using different subsets/groups of candidate sequences (provided that respective cell IDs result in different group indices G). Therefore, randomization may be increased, resulting in an improved mitigation of inter-cell interference.

In another implementation, the UE 100 may determine the sequence by selection from a subset/group G, which is configured or indicated to the UE 100. That is, the network node 200 may configure the UE 100 or indicate to the UE 100 which subset/group is to be utilized for sequence selection.

With this approach, different UEs 100 may select respective sequences using different subsets/groups of candidate sequences. Therefore, randomization may be increased, resulting in an improved mitigation of interference of signals transmitted/received by different UEs 100.

By controlling the number of groups and/or the number of sequences within a group, the flexibility and the mitigation of interference may be balanced.

### Embodiment 8

Embodiment 8 illustrates a specific implementation of the determination of the sequence, which changes after each hopping interval. In this respect, it is noted that the hopping interval may be fixed, set, determined or configured as described in the other embodiments, in particular embodiment 4.

In this embodiment, just as in Embodiments 4 to 7, the low-power signal indicates one sequence as an On-Off-Keying, OOK, based binary sequence in time domain. After expiration of each hopping interval, a new sequence is determined by selecting a sequence from among a plurality of candidate sequences according to a selection rule.

In this embodiment, the selection rule is based on a timing index of the occasion for reception of the low-power signal. In other words, for a specific occasion, the sequence is determined using the timing index of said occasion. For example, a system frame number of the occasion may be used as the timing index. However, the present disclosure is not limited thereto.

For example, a relation mapping the system frame number (or any other timing index) to one of the plurality of sequence candidates may be used to determine the sequence to be expected at the respective occasion.

It is to be noted that when using the timing index for determining the sequence, a previous sequence might not be used for this purpose and, accordingly, there is no need to store the previous sequence, resulting in a less complicated determination of the sequence by the UE 100.

### Embodiment 9

Embodiment 9 illustrates a specific implementation of the determination of the sequence, which changes after each hopping interval. In this respect, it is noted that the hopping interval may be fixed, set, determined or configured as described in the other embodiments, in particular embodiment 4.

In this embodiment, just as in Embodiments 4 to 8, the low-power signal indicates one sequence as an On-Off-Keying, OOK, based binary sequence in time domain. After expiration of each hopping interval, a new sequence is determined by selecting a sequence from among a plurality of candidate sequences according to a selection rule, wherein the selection rule is based on a previous sequence (from among the candidate sequences) and a fixed, configured or indicated hopping step value.

In this embodiment, the selection rule is based on an identifier of the UE 100 (UE ID). In other words, the sequence is determined using a UE ID. For example, the hopping step m and/or a subset of the candidate sequences may be determined using the UE ID.

For example, a relation mapping the UE ID to a hopping step and/or the subset of the candidate sequences may be used.

In a potential implementation similar to embodiment 6, such a mapping relation may be given, for example, by a function m(UE_ID)=UE_ID mod K, wherein K is a fixed, configured or indicated natural number equal to or larger than two. For example, K may be 2, 3, or 4. However, the present disclosure is not limited to any specific K. In a further exemplary implementation, the function mapping the UE ID to the hopping step m may be given by m(UE_ID) = k + UE_ID mod K, with k being a fixed, configured or indicated minimum hopping step equal to or larger than one. With such a mapping relation including the minimum hopping step, a situation where, for certain UE IDs, a hopping step of zero is determined, i.e. sequence hopping is not performed, may be prevented.

In a similar manner as described for embodiment 7, the UE 100 may determine the sequence by selecting a sequence from among a subset of the plurality of candidate sequences. In other words, the selection is limited to a group of candidate sequences from among all candidate sequences of the plurality of sequences. For example, the subset of the plurality of candidate sequences may be determined based on an identifier of the UE 100, i.e. a UE ID. When each group is associated with a group index G and exhibits a magnitude M_{G}, the UE 100 may use a mapping relation mapping the UE ID to a group index G. It is to be noted that the magnitude M_{G} of the groups may be equal or different among the groups.

The group index may be a function of the UE ID: G=G(UE_ID). For instance, the UE 100 may determine the group to be used for sequence determination using a mapping relation G(UE_ID) UE_ID mod 2. In this case, an even UE ID is mapped to group 0 and an odd UE ID is mapped to group 1. However, the present disclosure is not limited to this specific example, and any relation mapping a UE ID to a group index G may be utilized. In particular, the plurality of candidate sequences may comprise three or more subsets/groups of candidate sequences, and a relation providing, for a given UE_ID, a group index G may be utilized.

With this approach, a better randomization and, hence, reduced interference may be achieved by different UEs using different hopping steps m or different subsets of candidate sequences.

In embodiments 4 to 9, the low-power signal may be a low-power synchronization signal, LP-SS, for example. However, the disclosure is not limited thereto, and the low-power signal may be a low-power wake-up signal, LP-WUS, or the like.

### Embodiment 10

Embodiment 10 illustrates a specific implementation of the determination of the sequence, which changes after each hopping interval. In this respect, it is noted that the hopping interval may be fixed, set, determined or configured as described in the other embodiments, in particular embodiment 4.

In this embodiment, the low-power signal the low-power signal is an On-Off-Keying, OOK, based signal in time domain. The low-power signal indicates at least one sequence in time domain or in frequency domain respectively overlaid on at least one On-duration of the low-power signal.

For example, the low-power signal may be a low-power wake-up signal, LP-WUS, which may be received during a low-power operation of the UE 100.

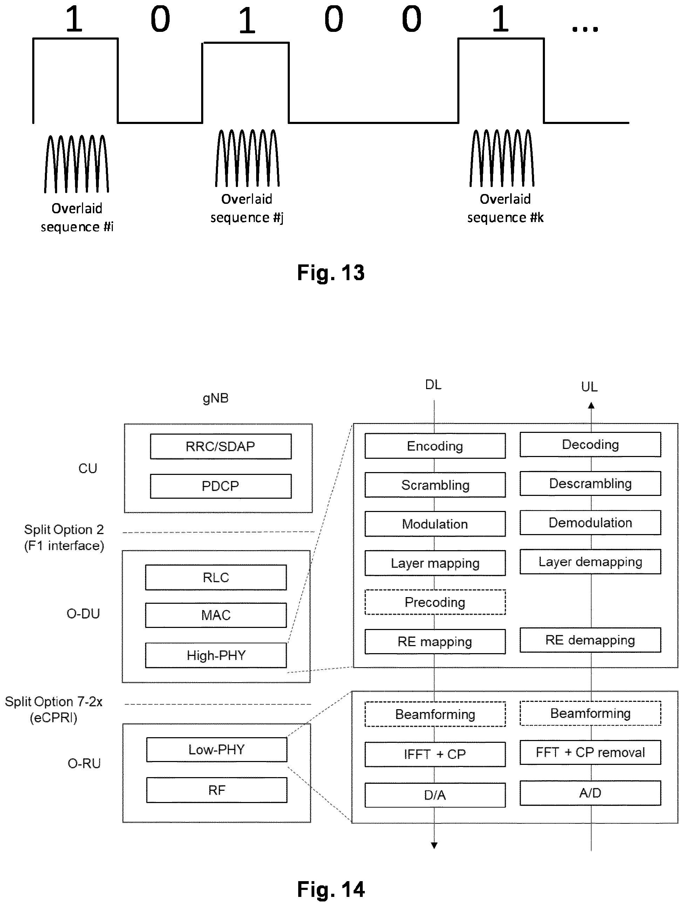

**Fig. 13** illustrates a section of such a signal. The signal consists of one or more On-durations (indicated as "1" in the figure) and one or more Off-durations ("indicated as "0" in the figure). During the On-durations, a signal may be transmitted, whereas during the Off-durations, no signal is expected. Further, each of the On-durations may comprise an overlaid sequence. That is, on one or more On-durations, a sequence may be overlaid. This sequence (these sequences) may be overlaid in time domain, in frequency domain or code domain. Some details of sequences overlaid on On-durations of an OOK signal may be found, for instance, in the WID of Rel. 19 in RP-240801. The overlaid sequence may, for example, be an OFDM symbol overlaid on the On-duration of the OOL low-power signal.

In essence, the approaches described in the framework of each of embodiments 4 to 8 may be applied to the determination of a hopping interval for sequences overlaid on On-durations of an OOK signal and/or for the determination of a sequence overlaid on respective On-durations of the OOK signal.

That is, in a similar manner as described for embodiment 4, a hopping interval may be determined as corresponding to N On-durations of the low-power signal, wherein N is fa fixed or configured natural number equal to or greater than one. That is, the sequence overlaid on On-durations changes for every N On-durations of the low-power signal. Alternatively, the hopping interval may be determined corresponding to N occasions. That is, the sequence overlaid on On-durations of the low-power signal changes every N occasions.

N may be fixed to one, i.e. the overlaid sequence may change for every On-duration. Alternatively, N may be fixed to or configured as a value greater than one. That is, the overlaid sequence may change only after N On-durations of the low-power signal.

It goes without saying that, instead of a number of On-durations or occasions, the hopping interval may be determined according to a (fixed, configured or indicated) time period. That is, the sequence may change every time said time duration has expired.

Further, in a similar manner as described for embodiments 5, the sequence may be determined (after expiration of the hopping interval) by selection from a plurality of candidate sequences based on a previous sequence and a fixed, configured or indicated hopping step value. For this purpose, the UE 100 may be configured with a plurality of candidate sequences. Alternatively, the candidate sequences may be fixed (e.g. in a standard) or indicated. The selection may be performed based on a selection rule. For example, when a sequence index of a sequence expected in an On-duration i is given by S(i), a sequence index in On-duration i+n (n being the hopping interval in terms of a number of On-durations) may be given by S(i+n)=[S(i) + m] mod M. In this selection rule, m denotes a hopping step and M denotes the total number of candidate sequences usable for the UE.

Further, in a similar manner as described for embodiment 6, the hopping step may be determined by the UE 100 making using of an identifier of a current serving cell of the UE 100.

Further, in a similar manner as described for embodiment 7, a sequence may be selected from among a subset of a plurality of candidate sequences. The subset may be determined based on an identifier of a current serving cell ID.

Further, in a similar manner as described for embodiment 8, the selection rule may be based on a timing index of the occasion for reception of the low-power signal, e.g. a system frame number of the occasion for transmission/reception of the low-power signal.

Further, in a similar manner as described for embodiment 9, the selection rule may be based on a UE ID. For example, a relation mapping the UE ID to a hopping step and/or the subset of the candidate sequences may be used.

In an implementation, wherein the low-power signal is a LP-WUS with at least one overlaid sequence for IDLE/INACTIVE UEs, a hopping interval may be of larger granularity than a hopping interval of an LP-SS. For example, a hopping interval may be a time period from a current LP-WUS monitoring occasion to the next one or several LP-WUS monitoring occasions, which may correspond to one or more i-DRX (idle-DRX) periodicities of the UE 100. In addition or alternatively, other hopping intervals may be configured, for instance, in SIB or linked to the UE ID. Further, as described above, the hopping step may be either SIB configured, linked to a frame or slot index, or linked to a UE ID.

For example, the hopping interval may be determined using a relation mapping a UE ID with a respective hopping interval. Similarly, the hopping step may be determined using a relation mapping a frame or slot index, or a UE ID to a respective hopping step. Such relations may be configured, fixed, or indicated to the UE 100, as described for the above embodiments.

Further, in an implementation, wherein the low-power signal is a LP-WUS with at least one overlaid sequence for CONNECTED UEs, LP-WUS occasions may be monitored and/or transmitted more frequently than for IDLE/INACTIVE UEs. In this case, hopping may be performed more frequently, i.e. with a smaller hopping interval than for IDLE/INACTIVE UEs. Accordingly, the hopping interval and/or the hopping step may be RRC configured. The hopping step may, in addition or alternatively, linked to the UE ID.

With this approach, inter-cell interference may be reduced by realizing an improved randomization.

### Further implementations

It is to be noted that the concepts described above may be equally applied to frequency resource hopping instead of or in addition to sequence hopping (sequence/code domain hopping). That is, the UE 100 may be configured with multiple subbands, physical resource block (PRB) groups, and/or bandwidths for a low-power signal like an LP-WUS or an LP-SS. The UE 100 monitor occasions for reception of the low-power signal in different frequency resources and/or different times, wherein the resources and/or times for monitoring the occasions for reception of the low-power signal.

The UE 100 and/or the network node 200 may apply the same or similar approach for determination of the hopping interval. Further, the UE 100 and/or the network node 200 may apply the same or similar approach for determining the next frequency resources or timings for reception (monitoring for reception) of the low-power signal. That is, instead of or in addition to sequence hopping, the UE 100 and/or the network node 200 may perform resource hopping (in frequency domain and/or time domain), in a corresponding manner as described for the embodiments.

For example, when performing time domain hopping of resources for reception of a low-power signal, the resources are not necessarily periodic and may be calculated or shifted by a factor or coefficient, wherein the hopping range (time domain shift) may be within a certain fixed, configured or indicated range known by the UE 100. In other words, the hopping step may relate to a time shift or time shift factor, which is applied when determining the timing of a next occasion for monitoring for reception of the low-power signal.

With this approach, randomization may be (further) increased, resulting in an improved mitigation of interferences.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**Fig. 14** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)". The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, provided is a user equipment, UE, comprising a transceiver, which, in operation, monitors a plurality of occasions for reception of a low-power signal indicating at least one sequence; and circuitry, which, in operation, determines a hopping interval for the at least one sequence of the low-power signal, wherein the at least one sequence changes according to a rule at the hopping interval, wherein the transceiver, in operation, receives, on one of the plurality of occasions, the low-power signal.

According to an embodiment the low-power signal indicates one sequence as an On-Off-Keying, OOK, based binary sequence in time domain.

According to an embodiment, the circuitry, in operation, determines the hopping interval corresponding to N occasions, N being a fixed or configured natural number equal to or greater than one, wherein the sequence changes for every N occasions according to the rule.

According to an embodiment, the circuitry, in operation, determines the hopping interval corresponding to a fixed or configured time duration, wherein the sequence changes after each expiration of said time duration.

According to an embodiment, the low-power signal is a low-power synchronization signal, LP-SS, which is optionally received in a low power operation of the UE.

According to an embodiment, the circuitry, in operation, performs at least one of channel synchronization and channel quality measurement based on the LP-SS.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the circuitry, in operation determines the hopping interval corresponding to N On-durations of the low-power signal, N being a fixed or configured natural number equal to or greater than one, wherein the sequence changes for every N On-durations of the low-power signal according to the rule, or the circuitry, in operation determines the hopping interval corresponding to N occasions , N being a fixed or configured natural number equal to or greater than one, wherein the sequence changes for every N occasion according to the rule.

According to an embodiment, the circuitry, in operation determines the hopping interval corresponding to a fixed or configured time duration, wherein the at least one sequence changes after each expiration of said time duration.

According to an embodiment, the low power signal carries information, indicated by one of at least two sequences; and the circuitry, in operation, determines the at least two sequences for each of the occasions; and obtains the information by determining which of the at least two sequences is indicated by the received low-power signal.

According to an embodiment, the low-power signal is a low-power wake-up signal, LP-WUS , which is optionally received in a low power operation of the UE.

According to an embodiment, the circuitry, in operation, initiates monitoring of a control channel according to the LP-WUS.

According to a second aspect, provided is a network node, comprising circuitry, which, in operation, determines a hopping interval for at least one sequence of a low-power signal, indicating the at least one sequence, for transmission on one of a plurality of occasions, wherein the at least one sequence changes according to a rule at the hopping interval; and a transceiver, which, in operation, transmits the low-power signal on the one of the plurality of occasions.

According to an embodiment the low-power signal indicates one sequence as an On-Off-Keying, OOK, based binary sequence in time domain.

According to an embodiment, the circuitry, in operation, determines the hopping interval corresponding to N occasions, N being a fixed or configured natural number equal to or greater than one, wherein the sequence changes for every N occasions according to the rule.

According to an embodiment, the transceiver, in operation transmits a hopping interval indicator indicating a number N of occasions corresponding to a hopping interval.

According to an embodiment, the circuitry, in operation, determines the hopping interval corresponding to a fixed or configured time duration, wherein the sequence changes after each expiration of said time duration.

According to an embodiment, the transceiver, in operation transmits a hopping interval indicator indicating a time duration of the hopping interval.

According to an embodiment, the low-power signal is a low-power synchronization signal, LP-SS.

According to an embodiment, the transceiver, in operation, transmits the low-power signal (e.g. the LP-SS).

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the circuitry, in operation determines the hopping interval corresponding to N On-durations of the low-power signal, N being a fixed or configured natural number equal to or greater than one, wherein the sequence changes for every N On-durations of the low-power signal according to the rule, or the circuitry, in operation determines the hopping interval corresponding to N occasions , N being a fixed or configured natural number equal to or greater than one, wherein the sequence changes for every N occasion according to the rule.

According to an embodiment, the transceiver, in operation, transmits a hopping interval indicator indicating a number N of occasions or a number N of On-periods corresponding to the hopping interval.

According to an embodiment, the circuitry, in operation determines the hopping interval corresponding to a fixed or configured time duration, wherein the at least one sequence changes after each expiration of said time duration.

According to an embodiment, the transceiver, in operation, transmits a hopping interval indicator indicating a time duration of the hopping interval.

According to an embodiment, the low power signal carries information, indicated by one of at least two sequences.

According to an embodiment, the low-power signal is a low-power wake-up signal, LP-WUS.

According to an embodiment, the transceiver, in operation, transmits the low-power signal (e.g. the LP-WUS).

According to a third aspect, provided is a method for a user equipment, comprising monitoring a plurality of occasions for reception of a low-power signal indicating at least one sequence; determining a hopping interval for the at least one sequence of the low-power signal, wherein the at least one sequence changes according to a rule at the hopping interval; and receiving, on one of the plurality of occasions, the low-power signal.

According to an embodiment the low-power signal indicates one sequence as an On-Off-Keying, OOK, based binary sequence in time domain.

According to an embodiment, the method comprises determining the hopping interval corresponding to N occasions, N being a fixed or configured natural number equal to or greater than one, wherein the sequence changes for every N occasions according to the rule.

According to an embodiment, method comprises determining the hopping interval corresponding to a fixed or configured time duration, wherein the sequence changes after each expiration of said time duration.

According to an embodiment, the low-power signal is a low-power synchronization signal, LP-SS, which is optionally received in a low power operation of the UE.

According to an embodiment, the method comprises performing at least one of channel synchronization and channel quality measurement based on the LP-SS.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the method comprises determining the hopping interval corresponding to N On-durations of the low-power signal, N being a fixed or configured natural number equal to or greater than one, wherein the sequence changes for every N On-durations of the low-power signal according to the rule, or the circuitry, in operation determines the hopping interval corresponding to N occasions, N being a fixed or configured natural number equal to or greater than one, wherein the sequence changes for every N occasion according to the rule.

According to an embodiment, the method comprises determining the hopping interval corresponding to a fixed or configured time duration, wherein the at least one sequence changes after each expiration of said time duration.

According to an embodiment, the low power signal carries information, indicated by one of at least two sequences; and the method comprises determining the at least two sequences for each of the occasions; and obtains the information by determining which of the at least two sequences is indicated by the received low-power signal.

According to an embodiment, the low-power signal is a low-power wake-up signal, LP-WUS, which is optionally received in a low power operation of the UE.

According to an embodiment, the method comprises initiating monitoring of a control channel according to the LP-WUS.

According to a fourth aspect, provided is a method for a network node, comprising determining a hopping interval for at least one sequence of a low-power signal, indicating the at least one sequence, wherein the at least one sequence changes according to a rule at a hopping interval; and transmitting the low-power signal on the one of the plurality of occasions.

According to an embodiment the low-power signal indicates one sequence as an On-Off-Keying, OOK, based binary sequence in time domain.

According to an embodiment, the method comprises determining the hopping interval corresponding to N occasions, N being a fixed or configured natural number equal to or greater than one, wherein the sequence changes for every N occasions according to the rule.

According to an embodiment, method comprises transmitting a hopping interval indicator indicating a number N of occasions corresponding to a hopping interval.

According to an embodiment, the method comprises determining the hopping interval corresponding to a fixed or configured time duration, wherein the sequence changes after each expiration of said time duration.

According to an embodiment, the method comprises transmitting a hopping interval indicator indicating a time duration of the hopping interval.

According to an embodiment, the low-power signal is a low-power synchronization signal, LP-SS.

According to an embodiment, the method comprises transmitting the low-power signal (e.g. the LP-SS).

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, method comprises determining the hopping interval corresponding to N On-durations of the low-power signal, N being a fixed or configured natural number equal to or greater than one, wherein the sequence changes for every N On-durations of the low-power signal according to the rule, or the method comprises determining the hopping interval corresponding to N occasions, N being a fixed or configured natural number equal to or greater than one, wherein the sequence changes for every N occasion according to the rule.

According to an embodiment, the method comprises transmitting a hopping interval indicator indicating a number N of occasions or a number N of On-periods corresponding to the hopping interval.

According to an embodiment, the method comprises determining the hopping interval corresponding to a fixed or configured time duration, wherein the at least one sequence changes after each expiration of said time duration.

According to an embodiment, the method comprises transmitting a hopping interval indicator indicating a time duration of the hopping interval.

According to an embodiment, the low power signal carries information, indicated by one of at least two sequences.

According to an embodiment, the low-power signal is a low-power wake-up signal, LP-WUS.

According to an embodiment, the method comprises transmitting the low-power signal (e.g. the LP-WUS).

According to a fifth aspect, provided is a user equipment, UE, comprising a transceiver, which, in operation, monitors a plurality of occasions for reception of a low-power signal indicating at least one sequence; and circuitry, which, in operation, determines the at least one sequence for each of the occasions, which changes at a hopping interval, wherein the transceiver, in operation, receives, on one of the plurality of occasions, the low-power signal according to the respective determined at least one sequence.

According to an embodiment, the low-power signal indicates one sequence as an On-Off-Keying, OOK, based binary sequence in time domain.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the circuitry, in operation, determines, after expiration of each hopping interval, a new sequence by selecting a sequence from among a plurality of candidate sequences according to a selection rule.

According to an embodiment, the selection rule is based on at least one of a previous sequence from among the plurality of candidate sequences, a fixed , configured, or indicated hopping step value, an identifier of a cell serving the UE, an identifier of the UE, and a timing index of the occasion for reception of the low-power signal.

According to an embodiment, the circuitry, in operation, determines the sequence by selecting the sequence from among a subset of the plurality of candidate sequences.

According to an embodiment, the subset of the plurality of candidate sequences is configured or indicated to the UE, or the circuitry, in operation, determines the subset of the plurality of candidate sequences based on an identifier of a cell serving the UE.

According to an embodiment, the plurality of candidate sequences is fixed, configured or indicated to the UE.

According to an embodiment, the low power signal carries information, indicated by one of at least two sequences; and the circuitry, in operation, determines the at least two sequences for each of the occasions; and obtains the information by determining which of the at least two sequences is indicated by the received low-power signal.

According to an embodiment, the low-power signal is a low-power synchronization signal, LP-SS, which is optionally received in a low power operation of the UE.

According to an embodiment, the circuitry, in operation, performs at least one of channel synchronization and channel quality measurement based on the LP-SS.

According to an embodiment, the low-power signal is a low-power wake-up signal, LP-WUS, which is optionally received in a low power operation of the UE.

According to an embodiment, the circuitry, in operation, initiates monitoring of a control channel according to the LP-WUS.

According to a sixth aspect, provided is a, network node, comprising circuitry, which, in operation, determines at least one sequence of a low-power signal, indicating the at least one sequence, for transmission on one of a plurality of occasions, wherein the at least one sequence chances at a hopping interval; and a transceiver, which, in operation, transmits, on the one of the plurality of occasions, the low-power signal according to the respective determined at least one sequence.

For example, the low-power signal is transmitted to a user equipment, UE.

According to an embodiment, the low-power signal indicates one sequence as an On-Off-Keying, OOK, based binary sequence in time domain.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the circuitry, in operation, determines, after expiration of each hopping interval, a new sequence by selecting a sequence from among a plurality of candidate sequences according to a selection rule.

According to an embodiment, the selection rule is based on at least one of a previous sequence from among the plurality of candidate sequences, a fixed, configured, or indicated hopping step value, an identifier of a cell serving the UE, an identifier of the UE, and a timing index of the occasion for reception of the low-power signal.

According to an embodiment, the transceiver, in operation, transmits a hopping step value indicator indicating the hopping step value.

According to an embodiment, the circuitry, in operation, determines the sequence by selecting the sequence from among a subset of the plurality of candidate sequences.

According to an embodiment, the subset of the plurality of candidate sequences is configured or indicated to the UE, or the circuitry, in operation, determines the subset of the plurality of candidate sequences based on an identifier of a cell serving the UE.

According to an embodiment, the transceiver, in operation, transmits a subset indicator indicating the subset of the plurality of candidate sequences.

According to an embodiment, the plurality of candidate sequences is fixed, configured or indicated to the UE.

According to an embodiment, the transceiver, in operation, transmits a candidate sequence indicator indicating the plurality of candidate sequences.

According to an embodiment, the low power signal carries information, indicated by one of at least two sequences.

According to an embodiment, the low-power signal is a low-power synchronization signal, LP-SS.

According to an embodiment, the transceiver, in operation, transmits the LP-SS.

According to an embodiment, the low-power signal is a low-power wake-up signal, LP-WS.

According to an embodiment, the transceiver, in operation, transmits the LP-WUS.

According to a seventh aspect, provided is method for a user equipment, UE, comprising monitoring a plurality of occasions for reception of a low-power signal indicating at least one sequence; determining the at least one sequence for each of the occasions, which changes at a hopping interval; and receiving, on one of the plurality of occasions, the low-power signal according to the respective determined at least one sequence.

According to an embodiment, the low-power signal indicates one sequence as an On-Off-Keying, OOK, based binary sequence in time domain.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the method comprises determining, after expiration of each hopping interval, a new sequence by selecting a sequence from among a plurality of candidate sequences according to a selection rule.

According to an embodiment, the selection rule is based on at least one of a previous sequence from among the plurality of candidate sequences, a fixed, configured, or indicated hopping step value, an identifier of a cell serving the UE, an identifier of the UE, and a timing index of the occasion for reception of the low-power signal.

According to an embodiment, the method comprises determining the sequence by selecting the sequence from among a subset of the plurality of candidate sequences.

According to an embodiment, the subset of the plurality of candidate sequences is configured or indicated to the UE, or the circuitry, in operation, determines the subset of the plurality of candidate sequences based on an identifier of a cell serving the UE.

According to an embodiment, the plurality of candidate sequences is fixed, configured or indicated to the UE.

According to an embodiment, the low power signal carries information, indicated by one of at least two sequences; and the method comprises determining the at least two sequences for each of the occasions; and obtaining the information by determining which of the at least two sequences is indicated by the received low-power signal.

According to an embodiment, the low-power signal is a low-power synchronization signal, LP-SS, which is optionally received in a low power operation of the UE.

According to an embodiment, the method comprises performing at least one of channel synchronization and channel quality measurement based on the LP-SS.

According to an embodiment, the low-power signal is a low-power wake-up signal, LP-WUS, which is optionally received in a low power operation of the UE.

According to an embodiment, the method comprises initiating monitoring of a control channel according to the LP-WUS.

According to an eighth aspect, provided is a method for a network node, comprising
For example, the low-power signal is transmitted to a user equipment, UE.

According to an embodiment, the low-power signal indicates one sequence as an On-Off-Keying, OOK, based binary sequence in time domain.

According to an embodiment, the low-power signal is an On-Off-Keying, OOK, based signal in time domain, and the low-power signal indicates the at least one sequence in time domain or in frequency domain respectively overlaid on at least one On-duration of the low-power signal.

According to an embodiment, the method comprises determining, after expiration of each hopping interval, a new sequence by selecting a sequence from among a plurality of candidate sequences according to a selection rule.

According to an embodiment, the selection rule is based on at least one of a previous sequence from among the plurality of candidate sequences, a fixed, configured, or indicated hopping step value, an identifier of a cell serving the UE, an identifier of the UE, and a timing index of the occasion for reception of the low-power signal.

According to an embodiment, the method comprises transmitting a hopping step value indicator indicating the hopping step value.

According to an embodiment, the method comprises determining the sequence by selecting the sequence from among a subset of the plurality of candidate sequences.

According to an embodiment, the subset of the plurality of candidate sequences is configured or indicated to the UE, or the method comprises determining the subset of the plurality of candidate sequences based on an identifier of a cell serving the UE.

According to an embodiment, the method comprises transmitting a subset indicator indicating the subset of the plurality of candidate sequences.

According to an embodiment, the plurality of candidate sequences is fixed, configured or indicated to the UE.

According to an embodiment, the method comprises transmitting a candidate sequence indicator indicating the plurality of candidate sequences.

According to an embodiment, the low power signal carries information, indicated by one of at least two sequences.

According to an embodiment, the low-power signal is a low-power synchronization signal, LP-SS.

According to an embodiment, the method comprises transmitting the LP-WS.

According to an embodiment, the low-power signal is a low-power wake-up signal, LP-WUS.

According to an embodiment, the method comprises transmitting the LP-WUS.

According to a ninth aspect, provided is a user equipment, UE, comprising a transceiver, which, in operation, monitors a plurality of occasions for reception of a low-power signal indicating at least one sequence; and circuitry, which, in operation, determines a hopping interval for the at least one sequence of the low-power signal, determines the at least one sequence for each of the occasions, wherein the at least one sequence changes at the determined hopping interval, and, receives, on one of the plurality of occasions, the low power signal according to the respective determined at least one sequence.

According to embodiments, the circuitry and the transceiver performs operations according to one or more aspects described in above first and fifth aspect.

According to an tenth aspect, provided is a network node, comprising circuitry, which, in operation, determines a hopping interval for at least one sequence of a low-power signal, indicating the at least one sequence, for transmission on one of a plurality of occasions, wherein the at least one sequence changes according to a rule at the hopping interval; and determines the at least one sequence of the low-power signal; and a transceiver, which, in operation, transmits the low-power signal on the one of the plurality of occasions.

According to embodiments, the method comprises steps according to one or more aspects described in above second and sixth aspect.

According to a eleventh aspect, provided is a method for a user equipment, UE, comprising monitoring a plurality of occasions for reception of a low-power signal indicating at least one sequence; determining a hopping interval for the at least one sequence of the low-power signal; determining the at least one sequence for each of the occasions, wherein the at least one sequence changes at the determined hopping interval; and receiving, on one of the plurality of occasions, the low power signal according to the respective determined at least one sequence.

According to embodiments, the method comprises steps according to one or more aspects described in above third and seventh aspect.

According to an twelfth aspect, provided is a method for a network node, comprising determining a hopping interval for at least one sequence of a low-power signal, indicating the at least one sequence, for transmission on one of a plurality of occasions, wherein the at least one sequence changes according to a rule at the hopping interval; determining the at least one sequence of the low-power signal; and transmitting the low power signal on the one of the plurality of occasions.

According to embodiments, the method comprises steps according to one or more aspects described in above fourth and eighth aspect.

## Claims

1. A user equipment, UE, comprising
a transceiver, which, in operation, monitors a plurality of occasions for reception of a low-power signal indicating at least one sequence; and
circuitry, which, in operation, determines a hopping interval for the at least one sequence of the low-power signal, wherein the at least one sequence changes according to a rule at the hopping interval, wherein
the transceiver, in operation, receives, on one of the plurality of occasions, the low-power signal.

2. The UE according to claim 1, wherein
the low-power signal indicates one sequence as an On-Off-Keying, OOK, based binary sequence in time domain.

3. The UE according to claim 2, wherein
the circuitry, in operation, determines the hopping interval corresponding to N occasions, N being a fixed or configured natural number equal to or greater than one, wherein the sequence changes for every N occasions according to the rule.

4. The UE according to claim 2 or 3, wherein
the circuitry, in operation, determines the hopping interval corresponding to a fixed or configured time duration, wherein the sequence changes after each expiration of said time duration.

5. The UE according to any one of claims 1 to 4, wherein
the low-power signal is a low-power synchronization signal, LP-SS, which is optionally received in a low power operation of the UE.

6. The UE according to claim 5, wherein
the circuitry, in operation, performs at least one of channel synchronization and channel quality measurement based on the LP-SS.

7. The UE according to claim 1, wherein
the low-power signal is an On-Off-Keying, OOK, based signal in time domain, and
the low-power signal indicates the at least one sequence in time domain or in frequency domain respectively overlaid on at least one On-duration of the low-power signal.

8. The UE according to claim 7, wherein
the circuitry, in operation determines the hopping interval corresponding to N On-durations of the low-power signal, N being a fixed or configured natural number equal to or greater than one, wherein the sequence changes for every N On-durations of the low-power signal according to the rule, or
the circuitry, in operation determines the hopping interval corresponding to N occasions, N being a fixed or configured natural number equal to or greater than one, wherein the sequence changes for every N occasion according to the rule.

9. The UE according to claim 7, wherein
the circuitry, in operation determines the hopping interval corresponding to a fixed or configured time duration, wherein the at least one sequence changes after each expiration of said time duration.

10. The UE according to any one of claims 7 to 9, wherein
the low power signal carries information, indicated by one of at least two sequences; and
the circuitry, in operation,
determines the at least two sequences for each of the occasions; and
obtains the information by determining which of the at least two sequences is indicated by the received low-power signal.

11. The UE according to any one of claims 7 to 10, wherein
the low-power signal is a low-power wake-up signal, LP-WUS, which is optionally received in a low power operation of the UE.

12. The UE according to claim 11, wherein
the circuitry, in operation, initiates monitoring of a control channel according to the LP-WUS.

13. A network node, comprising
circuitry, which, in operation, determines a hopping interval for at least one sequence of a low-power signal, indicating the at least one sequence, for transmission on one of a plurality of occasions, wherein the at least one sequence changes according to a rule at the hopping interval; and
a transceiver, which, in operation, transmits the low-power signal on the one of the plurality of occasions.

14. A method for a user equipment, UE, comprising
monitoring a plurality of occasions for reception of a low-power signal indicating at least one sequence;
determining a hopping interval for the at least one sequence of the low-power signal, wherein the at least one sequence changes according to a rule at the hopping interval; and
receiving, on one of the plurality of occasions, the low-power signal.

15. A method for a network node, comprising
determining a hopping interval for at least one sequence of a low-power signal, indicating the at least one sequence, wherein the at least one sequence changes according to a rule at a hopping interval; and
transmitting the low-power signal on the one of the plurality of occasions.
